(19) Europäisches Patentamt

European Patent Office

Office européen des brevets

(11) EP 0 566 457 B1

(12) **FASCICULE DE BREVET EUROPEEN**

(45) Date de publication et mention
de la délivrance du brevet:
**24.11.1999 Bulletin 1999/47**

(51) Int Cl.6: **C21D 8/02**, B32B 15/01

(21) Numéro de dépôt: **93400930.9**

(22) Date de dépôt: **08.04.1993**

(54) **Procédé de fabrication d'une tôle plaquée comportant une couche résistant à l'abrasion en acier à outil**

Verfahren zum Herstellen plattierter Bleche mit einer abriebfesten Schicht aus Werkzeugstahl

Method for producing clad sheets with an abrasion resistant layer of tool steel

(84) Etats contractants désignés:
**AT BE CH DE ES FR IT LI NL**

(30) Priorité: **16.04.1992 FR 9204697**

(43) Date de publication de la demande:
**20.10.1993 Bulletin 1993/42**

(60) Demande divisionnaire: **99103626.0 / 0 936 274**

(73) Titulaire: **CREUSOT-LOIRE INDUSTRIE
F-92800 Puteaux (FR)**

(72) Inventeurs:
• **Brisson, Jean Georges
F-71200 Le Creusot (FR)**
• **Beguinot, Jean
F-71200 Le Creusot (FR)**

(74) Mandataire: **Bouget, Lucien et al
Cabinet Lavoix
2, Place d'Estienne d'Orves
75441 Paris Cédex 09 (FR)**

(56) Documents cités:
**DD-A- 244 360            DE-A- 2 309 871
DE-B- 2 142 360         US-A- 2 874 082**

• **DATABASE WPIL Week 8313, Derwent Publications Ltd., London, GB; AN 83-30714K & JP-A-58 027 860 (NIPPON PISTON RING) 18 Février 1983**
• **C.W. WEGST 'Stahlschlüssel', 1986, VERLAG STAHLSCHLÜSSEL WEGST GMBH, MARBACH DE**

## Description

L'invention est relative à la fabrication d'une tôle plaquée comportant une couche résistant à l'abrasion en un acier du type acier à outil et une couche en acier doux facilement soudable.

Dans les mines, les carrières, les travaux publics ou d'autres secteurs de l'industrie, il est connu d'utiliser des tôles plaquées ayant une couche résistant à l'abrasion, en acier à outil, et une couche facilement soudable en acier doux, pour réaliser des équipements tels que des blindages de trémie, des lames de niveleuses, ou d'autres dispositifs soumis à l'abrasion.

Ces tôles plaquées sont généralement obtenues par laminage et sont utilisées à l'état brut de refroidissement après laminage. Ces tôles plaquées ont la dureté maximale qu'il est possible d'obtenir et donc une très bonne tenue à l'abrasion. Mais il est souhaitable d'améliorer encore cette tenue à l'abrasion. Par ailleurs lors du refroidissement après laminage les tôles plaquées forment une bilame et se déforment. Il est nécessaire de les planer. Du fait de la grande dureté de la couche en acier à outil, cette opération est difficile et induit dans les tôles plaquées des contraintes résiduelles importantes gênantes lors de la mise en oeuvre et en service.

On connaît par le DD-A-244.360, un procédé de fabrication d'une tôle résistant à l'abrasion et soudable, par plaquage d'un acier à outil sur une base en acier de construction, par laminage à chaud. La tôle plaquée laminée à chaud est trempée à l'huile depuis une température comprise entre 1040 et 1100°C puis revenue à une température comprise entre 450 et 500°C.

Le but de la présente invention est de proposer un procédé permettant d'obtenir des tôles plaquées ayant une couche en acier à outil dont la résistance à l'abrasion soit améliorée et exempte de contraintes résiduelles.

A cet effet, l'invention a pour objet un procédé de fabrication d'une tôle plaquée comportant une couche résistant à l'abrasion en acier à outil et une couche facilement soudable en acier doux, dans lequel :

- on réalise un bloc constitué de deux plaques en acier à outil enserrées entre deux plaques en acier doux renfermant, en poids, moins de 0,25 % de carbone et ayant un carbone équivalent inférieur à 0,5 %, les plaques étant assemblées suivant un contour périphérique du bloc,
- on lamine le bloc à chaud,
- on refroidit à l'air le bloc laminé depuis une température de fin de laminage à chaud inférieure à 900°C jusqu'à une température inférieure à 200°C,
- on effectue un revenu du bloc laminé à une température comprise entre 450 et 650°C et,
- on découpe le bloc suivant son contour périphérique de manière à obtenir deux tôles plaquées, les tôles plaquées obtenues étant bien planes et ne nécessitant pas d'opération complémentaire de planage.

La température de revenu est comprise entre 450°C et 650°C et de préférence entre 500°C et 600°C.

L'acier à outil peut avoir une composition chimique telle que (en poids) :

0,5 % ≤ C ≤ 2,5 %
3 % ≤ Cr ≤ 16 %
Mo ≤ 2 %
V ≤ 2 %
W ≤ 2 %
Mn ≤ 2 %
Ni ≤ 3 %
Si ≤ 2 %

et de préférence :

1 % ≤ C ≤ 2 %
et 8 % ≤ Cr ≤ 13 %.

Les tôles plaquées ainsi obtenues sont bien planes, sont exemptes de contraintes résiduelles, sont facilement soudables sur une face et ont une résistance à l'abrasion améliorée sur l'autre face.

L'invention va maintenant être décrite plus en détail mais de façon non limitative.

Les tôles plaquées obtenues selon l'invention sont constituées d'une couche en acier à outil très dure plaquée sur une couche d'acier doux soudable appelée base.

La famille des aciers à outils est très large et se caractérise principalement par une teneur en carbone supérieure à 0,5 % et en général inférieure à 2,5 % et une teneur en chrome comprise entre 3 % et 16 % ; cette combinaison permet d'obtenir un acier autotrempant ayant une structure martensitique très dure et pouvant contenir des carbures.

Ces aciers peuvent également contenir des éléments carburigènes tels que le molybdène, le vanadium ou le tungstène en des teneurs généralement inférieures à 2 %. Ils contiennent en outre du manganèse (moins de 2%) et du silicium (moins de 2 %) et peuvent contenir jusqu'à 3 % de nickel. De préférence la teneur en carbone est comprise entre 1 % et 2 % et le chrome entre 8 % et 13 %. Les fortes teneurs en chrome sont recherchées pour obtenir des carbures primaires qui précipitent à la solidification et qui sont assez grossiers (leur dimension est de l'ordre de 10 μm).

Les aciers doux utilisés pour réaliser la base sont des aciers de construction contenant du carbone, du silicium, du manganèse et éventuellement du chrome, du molybdène, du nickel, du vanadium, du cuivre et des impuretés. Pour être facilement soudables, les aciers contiennent moins de 0,25 % de carbone et ont un carbone équivalent :

$$C_{eq} = C + \frac{Mn}{6} + \frac{Cr + Mo}{5} + \frac{Ni + Cu + V}{15} \leq 0,50 \%$$

Pour réaliser une tôle plaquée selon l'invention, on réalise un bloc constitué de deux plaques ou inserts en acier à outil enserrées entre deux plaques ou bases en acier doux. L'ensemble est solidaire et fermé par un cordon de soudure périphérique selon une technique connue de l'homme de métier.

Le bloc est alors chauffé au-dessus de 1000°C et laminé à chaud pour obtenir un bloc laminé dont les dimensions correspondent aux dimensions des tôles qu'on veut obtenir. Le laminage se termine par exemple entre environ 800°C et 900°C.

On laisse alors refroidir à l'air le bloc laminé jusqu'à une température voisine de la température ambiante, par exemple 70°C et dans tous les cas inférieure à 200°C. Pendant ce refroidissement les plaques en acier à outil subissent une auto-trempe et acquièrent une structure martensitique très dure ; la couche en acier doux acquiert une structure du type ferrite-perlite.

Après le refroidissement on effectue sur le bloc laminé un revenu à une température comprise entre 450°C et 650°C et de préférence entre 500°C et 600°C afin de relaxer les contraintes induites dans les couches plaquées, d'adoucir la matrice martensitique et de faire précipiter des carbures secondaires.

La relaxation des contraintes se faisant dans un bloc fermé et bridé, se traduit par un planage des tôles plaquées.

Cet auto-planage thermique a donc pour résultat de corriger la déformation naturelle par effet bilame sans qu'on ait à réaliser l'opération habituelle de planage sur planeuse mécanique, dangereuse sur ce type de produit dur et en tous les cas génératrice de fortes contraintes résiduelles.

La précipitation de carbures secondaires fins de dimension de l'ordre de 1 μm permet de limiter l'adoucissement de la matrice martensitique au revenu.

La température de revenu est choisie supérieure à 450°C car en-dessous la relaxation des contraintes est insuffisante et la précipitation des carbures secondaires est très faible. Elle ne dépasse pas 650°C car au-delà la structure martensitique est trop adoucie et parcequ'elle doit rester en-dessous de la température de transformation en austénite.

Après le revenu, le bloc laminé est découpé selon son pourtour, ce qui permet d'obtenir deux tôles plaquées bien planes qui ont une couche en acier doux soudable à structure ferrite-perlite et une couche en acier à outil très dure ayant une structure martensitique adoucie contenant une fine précipitation de carbures secondaires et, si les teneurs en carbone et en chrome sont suffisantes, des carbures primaires grossiers ayant précipité à la solidification.

On a constaté de façon surprenante que ces aciers à outils trempés à l'air et revenus avaient une résistance à l'abrasion très nettement supérieure à celle des mêmes aciers à outils bruts de trempe, a priori plus durs. Celà s'explique probablement par la fine précipitation de carbures de chrome.

A titre d'exemple on a réalisé des tôles plaquées dont la couche d'acier à outil était constituée d'un acier type D2 selon la norme américaine AISI et de composition :

| C | Si | Mn | Ni | Cr | Mo | V |
|---|---|---|---|---|---|---|
| 1,5 % | 0,34 % | 0,35 % | 0,19 % | 11,5 % | 0,72 % | 0,92 % |

La température de revenu était de 500°C et la dureté de la couche en acier à outil était de 54 HRC.

On a réalisé des essais comparatifs entre cette tôle plaquée et une tôle plaquée dont la couche d'acier à outil avait la même composition mais qui n'avait pas subi de revenu (brute de refroidissement) en faisant tourner des échantillons dans des granulats de quartz et en mesurant la perte de poids au bout d'un temps déterminé. On a constaté que la perte de poids de l'échantillon ayant subi un traitement de revenu était de 30 % inférieure à la perte de poids de l'échantillon brut de trempe soit une tenue à l'abrasion augmentée de 30 %.

**Revendications**

1. Procédé de fabrication d'une tôle plaquée comportant une couche résistant à l'abrasion en acier à outil et une couche facilement soudable en acier doux, dans lequel :

   - on réalise un bloc constitué de deux plaques en acier à outil enserrées entre deux plaques en acier doux renfermant, en poids, moins de 0,25 % de carbone et ayant un carbone équivalent inférieur à 0,5 %, les plaques étant assemblées suivant un contour périphéique du bloc,
   - on lamine le bloc à chaud,
   - on refroidit à l'air le bloc laminé depuis une température de fin de laminage à chaud inférieure à 900°C jusqu'à une température inférieure à 200°C,
   - on effectue un revenu du bloc laminé à une température comprise entre 450 et 650°C, et
   - on découpe le bloc suivant son contour périphérique de manière à obtenir deux tôles plaquées,

   les tôles plaquées obtenues étant bien planes et ne nécessitant pas d'opération complémentaire de planage.

2. Procédé suivant la revendication 1, caractérisé en ce que la température de fin de laminage à chaud est comprise entre 800°C et 900°C.

3. Procédé selon l'une quelconque des revendications 1 et 2, caractérisé en ce que la température de revenu est comprise entre 500°C et 600°C.

4. Procédé selon les revendication 1 à 3, caractérisé en ce que l'acier à outil comprend en sa composition chimique en poids :

   0,5 % ≤ C ≤ 2,5 %
   3 % ≤ Cr ≤ 6 %
   Mo ≤ 2 %
   V ≤ 2 %
   W ≤ 2%
   Mn ≤ 2 %
   Ni ≤ 3 %
   Si ≤2%.

5. Procédé selon la revendication 4, caractérisé en ce que l'acier à outil comprend en sa composition chimique, en poids :
   1 % ≤ C ≤2 % ; 8 % ≤ Cr ≤ 13 %.

**Patentansprüche**

1. Verfahren zur Herstellung eines Zweilagenblechs, das eine abriebfeste Schicht aus Werkzeugstahl und eine leicht schweißbare Schicht aus Flußstahl besitzt, wobei; ein Block hergestellt wird, bestehend aus zwei Werkzeugstahlplatten, die zwischen zwei Flußstahlplatten eingebracht sind, die, bezogen auf das Gewicht, weniger als 0,25% Kohlenstoft umfassen und ein Kohlenstoffäquivalent unter 0,5% aufweisen, wobei die Platten entlang einer äußeren Kontur des Blocks zusammengefügt sind,

   - der Block warmgewalzt wird,
   - der gewalzte Block an der Luft von einer Warmwalz-Endtemperatur unter 900°C auf eine Temperatur unter 200°C abgekühlt wird,
   - eine Aushärtung des gewalzten Blocks bei einer Temperatur von 450 bis 650°C durchgeführt wird und
   - der Block entlang seiner äußeren Kontur so gespalten wird, daß zwei Zweilagenbleche erhalten werden, wobei die erhaltenen Zweilagenbleche ganz eben sind und kein zusätzliches Glätten mehr benötigen.

2. Verfahren nach Anspruch 1, dadurch gekennzeichnet, daß die Warmwalz-Endtemperatur von 800°C bis 900°C ist.

3. Verfahren nach einem der Ansprüche 1 und 2, dadurch gekennzeichnet, daß die Aushärtungstemperatur von 500°C bis 600°C ist.

**4.** Verfahren nach den Anspruchen 1 bis 3, dadurch gekennzeichnet, daß der Werkzeugstahl in seiner chemischen Zusanmensetzung, bezogen auf das Gewicht, umtaßt:

$0,5\% \leq C \leq 2,5\%$
$3\% \leq Cr \leq 16\%$
$Mo \leq 2\%$
$V \leq 2\%$
$W \leq 2\%$
$Mn \leq 2\%$
$Ni \leq 3\%$
$Si \leq 2\%$.

**5.** , Verfahren nach Anspruch 4, dadurch gekennzeichnet, daß der Werkzeugstahl in seiner chemischen Zusammensetzung, bezogen auf das Gewicht, umfaßt:
$1\% \leq C \leq 2\%$; $8\% \leq Cr \leq 13\%$.

## Claims

**1.** A process for fabricating a clad plate comprising a layer of tool steel resistant to abrasion and a layer of mild steel which can be easily welded, wherein:

- a block is formed from two plates of tool steel held between two plates of mild steel containing by weight less than 0.25% carbon and having a carbon equivalent less than 0.5%, the plates being joined along a peripheral contour of the block,
- the block is hot rolled,
- the rolled block is cooled in air from a temperature at the end of the hot rolling less than 900°C dawn to a temperature less than 200°C,
- the rolled block is annealed at a temperature between 450 and 650°C, and
- the block is cut along its peripheral contour so as to obtain two clad plates,

the clad plates obtained having good flatness and not requiring a supplementary flattening operation.

**2.** A process according to claim 1, characterized in that the temperature at the end of the hot rolling lies between 800°C and 900°C.

**3.** A process according to either of claims 1 and 2, characterized in that the annealing temperature lies between 500°C and 900°C.

**4.** A process according to claim 1 to 3, characterized in that the tool steel has the chemical composition by weight:

$0.5\% \leq C \leq 2.5\%$
$3\% \leq Cr \leq 16\%$
$Mo \leq 2\%$
$V \leq 2\%$
$W \leq 2\%$
$Mn \leq 2\%$
$Ni \leq 3\%$
$Si \leq 2\%$.

**5.** A process accurding to claim 4, characterized in that the tool steel has a chemical composition by weight:
$1\% \leq C \leq 2\%$; $8\% \leq Cr \leq 13\%$.